# EUROPÄISCHE PATENTANMELDUNG

(11) **EP 3 901 010 A1**
(43) Veröffentlichungstag der Anmeldung: **27.10.2021**
(21) Anmeldenummer: 21169038.3
(22) Anmeldetag: 18.04.2021
(51) Int. Cl.: B62D 25/20, B62D 29/04, G01M 5/00, G01M 11/08

(54) **STRUKTURBAUTEIL**

(30) Priorität: 23.04.2020 DE 202020102252 U
(71) Anmelder: Weber Fibertech GmbH, 88677 Markdorf (DE)
(72) Erfinder: STÖTZNER, Norbert, 88677 Markdorf (DE)
(74) Vertreter: Raible Deissler Lehmann Patentanwälte PartG mbB

(57) **Zusammenfassung**

Strukturbauteil, insbesondere für eine Fahrzeugkarosserie, mit einem Strukturelement (12) und einer Sensoranordnung (16), wobei die Sensoranordnung (16) mit dem Strukturelement (12) verbunden ist und mindestens einen Lichtwellenleiter (14) umfasst.

## Beschreibung

Die Erfindung betrifft ein Strukturbauteil, insbesondere ein Strukturbauteil für ein Kraftfahrzeug.

Strukturbauteile werden in vielen Gebieten eingesetzt und dienen regelmäßig dazu, mechanische Kräfte aufzunehmen und zu übertragen. Weiterhin können sie dazu dienen, andere Bauteile miteinander zu verbinden. In vielen Fällen wird versucht, ein Strukturbauteil mit hoher Steifigkeit und gleichzeitig niedrigem Gewicht bereitzustellen. Dies ist insbesondere im Bereich des Leichtbaus von Bedeutung, der sich zunehmend als vorteilhaft erweist und in vielen Bereichen der Technik immer häufiger eingesetzt wird.

Auch Fahrzeuge, insbesondere Kraftfahrzeuge, können durch Einsatz solcher Strukturbauteile leichter und stabiler gestaltet werden, ohne dass auf Komfort und Sicherheit verzichtet werden muss.

Im Fahrzeugbereich hilft der Einsatz von Strukturbauteilen u. a. dazu, CO₂-Emissionen zu verringern. In diesem Bereich werden Strukturbauteile zum Schutz von Komponenten und Baugruppen eingesetzt. So können flächige, faserverstärkte Strukturbauteile bspw. an einer Fahrzeugunterseite eingesetzt werden und dienen dann als Unterbodenschutz.

Die Druckschrift DE 10 2017 110 906 A1 beschreibt ein Strukturbauteil, das insbesondere zum Einsatz in einer Fahrzeugkarosserie eingerichtet ist. Das Strukturbauteil weist ein erstes Strukturelement auf, das einen Raumbereich zumindest teilweise umgibt, so dass im Inneren des ersten Strukturelements ein Hohlraum gebildet ist. Dieses erste Strukturelement weist einen diesen Hohlraum begrenzenden Oberflächenbereich und ein zweites Strukturelement auf. Es ist weiterhin ein Verstärkungselement vorgesehen, das zur mechanischen Verstärkung des ersten Strukturelements dient.

Zu beachten ist, dass Strukturbauteile für bestimmte Lastfälle ausgelegt sind und diesen Lastfällen standhalten können. Im Betrieb können aber Lastfälle auftreten, die nur durch Bauteile zu beherrschen sind, deren Einsatz jedoch Nachteile, wie bspw. ein hohes Gewicht, ein großer Bauraum und/oder teure Materialien, mit sich bringt.

Vor diesem Hintergrund wird ein Strukturbauteil mit den Merkmalen des Anspruchs 1 vorgestellt. Ausführungsformen ergeben sich aus den abhängigen Ansprüchen und aus der Beschreibung.

Es wurde nunmehr erkannt, dass es als Alternative zu dem Einsatz von Strukturbauteilen mit den genannten Nachteilen möglich ist, Strukturbauteile einzusetzen, die kostengünstiger, leichter und/oder schlanker ausgeführt sein können, wenn das Strukturbauteil derart ausgestaltet ist, so dass bei diesem eine Schädigung zuverlässig erkannt werden kann.

Die von außen auf das Strukturbauteil aufgebrachten Lasten können auch sehr gering sein, so dass das Strukturbauteil nur sich selber tragen muss. In diesem Fall stellt das Strukturbauteil eine Sensorplatte dar.

Es wurde zudem erkannt, dass zum Erfassen einer solchen Schädigung des Strukturbauteils eine geeignete bzw. entsprechende Sensorik eingesetzt werden kann, die dazu eingerichtet ist, eine solche Schädigung zu erkennen. Dies bedeutet, dass, wenn es aufgrund einer zu hohen Belastung des Strukturbauteils zu einer Beschädigung desselben kommt, die Sensorik diese Beschädigung erkennt. Diese Beschädigung kann dann bspw. dem Nutzer bzw. dem Fahrer oder einer anderen Person angezeigt werden, so dass dann ggf. das beschädigte Strukturbauteil ausgetauscht werden kann.

Als mögliche Sensoren bzw. Sensoriken kommen vibroakustische Sensoren, Dehnungsmessstreifen und vergleichbare Sensoren in Betracht. Hierin vorgeschlagen wird:
Ein Strukturbauteil, das insbesondere für eine Fahrzeugkarosserie vorgesehen ist. Dieses Strukturbauteil umfasst ein Strukturelement und eine Sensoranordnung, wobei die Sensoranordnung mit dem Strukturelement verbunden ist. Weiterhin umfasst die Sensoranordnung mindestens einen Lichtwellenleiter.

Das Strukturelement stellt den Körper dar, der im eingebauten Zustand bspw. dazu dient, mechanische Kräfte aufzunehmen, zu übertragen und/oder andere Bauteile miteinander zu verbinden. Mit diesem Strukturelement verbunden ist die Sensoranordnung und damit der mindestens eine Lichtwellenleiter.

Lichtwellenleiter sind aus Lichtleitern bestehende Kabel und Leitungen, die zur Übertragung von Licht dienen. Zu beachten ist, dass diese nicht nur zur Übertragung von Licht im sichtbaren Bereich dienen, sondern auch elektromagnetische Wellen außerhalb des sichtbaren Bereichs übertragen können. So kann bspw. auch Licht im infraroten oder ultravioletten Bereich übertragen werden. Die Sensoranordnung des vorgeschlagenen Strukturbauteils ist damit nicht auf den sichtbaren Wellenlängenbereich beschränkt.

Lichtwellenleiter werden in vielen Fällen auch als Glasfaserkabel bezeichnet, wobei in diesen typischerweise mehrere Lichtwellenleiter gebündelt werden, die zudem zum Schutz und zur Stabilität der einzelnen Fasern noch mechanisch verstärkt sind. In jedem Fall ist das beschriebene Strukturbauteil nicht auf Glasfasern als Lichtwellenleiter beschränkt.

Die eingesetzten Lichtwellenleiter können auch zumindest teilweise mit geeigneten Steckverbindern versehen sein.

Der mindestens eine Lichtwellenleiter ist derart mit dem Strukturelement verbunden, dass es bei einer übermäßigen Beanspruchung des Strukturelements oder bei einer Beschädigung desselben auch zu einer Beeinträchtigung der Funktion des mindestens einen Lichtwellenleiters kommt. An einem Ende des Lichtwellenleiters wird Licht bzw. eine elektromagnetische Strahlung typischerweise mit einem lichtemittierenden Element eingespeist und an dem anderen Ende ausgekoppelt und mit einem entsprechenden photo- bzw. lichtempfindlichen Element erfasst. Die Beeinträchtigung der Funktion des mindestens einen Lichtwellenleiters kann so erkannt und damit auf eine übermäßige Belastung oder gar Beschädigung des Strukturelements rückgeschlossen werden. Somit kann vorzugsweise rechtzeitig eine Beschädigung bzw. eine drohende Beschädigung des Strukturelements und damit auch des Strukturbauteils erkannt werden und es können geeignete Gegenmaßnahmen eingeleitet werden. So kann bspw. ein defektes Strukturbauteil ausgetauscht werden.

In Ausgestaltung ist wenigstens ein Lichtwellenleiter von dem mindestens einen Lichtwellenleiter in dem Strukturelement angeordnet. Der wenigstens eine Lichtwellenleiter verläuft damit in dem Strukturelement bzw. im Inneren des Strukturelements. Ein solches Strukturbauteil kann bspw. durch Umspritzen oder Umgießen mit dem Material des Strukturelements um den wenigstens einen Lichtwellenleiter gefertigt werden. Bei einem anderen Verfahren ist vorgesehen, in das gefertigte Strukturelement wenigstens eine Bohrung einzubringen, durch die dann jeweils wenigstens ein Lichtwellenleiter geführt wird. In einer weiteren Ausführung ist wenigstens ein Lichtwellenleiter von dem mindestens einen Lichtwellenleiter an einer Oberfläche des Strukturelements angeordnet. Es sind auch Kombinationen der beiden Ausgestaltungen denkbar. So können bspw. einige der Lichtwellenleiter in dem Strukturelement und andere an der Oberfläche des Strukturelements vorgesehen sein.

Typischerweise verläuft der mindestens eine Lichtwellenleiter von einem Ende des Strukturelements zu dem gegenüberliegenden Ende des Strukturelements. Die Lichtwellenleiter können dabei nebeneinander in gleichen Abständen zueinander angeordnet sein. Alternativ können auch in Bereichen des Strukturelements, die ggf. einer stärkeren Belastung ausgesetzt sind, mehr Lichtwellenleiter als in anderen Bereichen angeordnet sein. Dies ermöglicht auch eine differenzierte Aussage zum Maß der Beschädigung des Strukturbauteils und erhöht die Empfindlichkeit der eingesetzten Sensoranordnung.

Weiterhin können Lichtwellenleiter auch abschnittsweise nur zum Teil in dem Strukturelement verlaufen. Diese verlaufen dann entlang einer Oberfläche, zum Teil in das Strukturelement eingebettet.

Das Strukturelement kann als flächiges Element ausgebildet sein. Als solches kann es ein Teil der Karosserie eines Fahrzeugs darstellen. In einer Ausführungsform dient das Strukturbauteil als Unterbodenschutz eines Kraftfahrzeugs.

Weiterhin kann das Strukturbauteil als faserverstärktes Element ausgebildet sein. Es kann sich bspw. um ein faserverstärktes Kunststoffbauteil aus Fasern und thermoplastischem oder duroplastischem Matrixmaterial handeln. In einer Ausführungsform handelt es sich um ein faserverstärktes Kunststoffbauteil aus lichtleitenden Fasern und thermoplastischem oder duroplastischem Matrixmaterial. Die Fasern bzw. Verstärkungsfasern sind dann zumindest zum Teil gleichzeitig lichtleitende Fasern und dienen als Wellenleiter.

Außerdem kann das Strukturelement ein Gewebe aus Endlosfasern oder ein Gelege aus Endlosfasern umfassen. Auch diese Endlosfasern können zumindest teilweise als Lichtwellenleiter dienen.

Zudem kann das Strukturelement unidirektionale Profile oder Tapes umfasst, die in einer thermoplastischen oder duromeren Matrix eingebettet sind.

In einer weiteren Ausführungsform umfasst das Strukturbauteil mindestens ein photo- bzw. lichtemittierendes Element und mindestens ein photo- bzw. lichtempfindliches Element. Die genannten Elemente sind somit Komponenten des Strukturbauteils. Typischerweise ist dann jedem einen Ende der Lichtwellenleiter ein lichtemittierendes Ende und jedem anderen Ende der Lichtwellenleiter ein photoempfindliches Element zugeordnet. Als Elemente kommen insbesondere photoelektrische Halbleiterelemente in Betracht. So kann das mindestens eine lichtemittierende Element eine Leuchtdiode (LED) sein. Das mindestens eine lichtempfindliche Element kann ein Photowiderstand oder ein Phototransistor sein.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

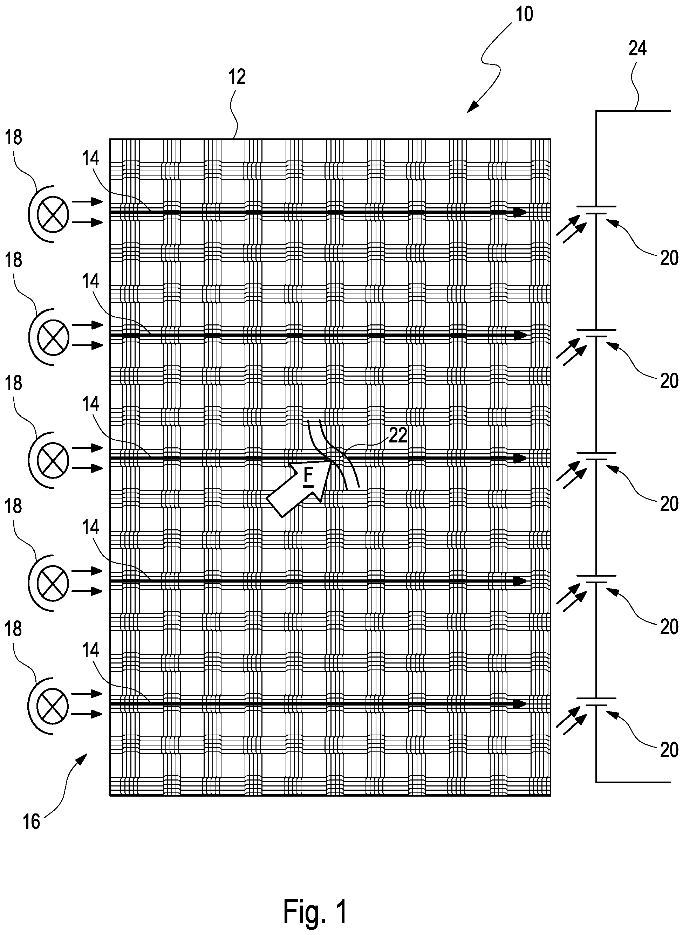

Figur 1 zeigt eine Ausführungsform des vorgestellten Strukturbauteils in einer schematischen Darstellung.

Die Erfindung ist anhand eines Ausführungsbeispiels in der Zeichnung schematisch dargestellt und wird im folgenden unter Bezugnahme auf die Zeichnung ausführlich beschrieben.

Figur 1 zeigt eine Ausführungsform eines Strukturbauteils, das insgesamt mit der Bezugsziffer 10 bezeichnet ist. Dieses Strukturbauteil 10 umfasst ein flächiges Strukturelement 12, das in diesem Fall aus einem Endlosfasergewebe, hier ohne umgebende thermoplastische oder duroplastische Matrix dargestellt, besteht. Es sind aber auch Endlosfasergelege denkbar.

In dem Strukturelement 12 verlaufen Lichtwellenleiter 14, bspw. Glasfaserkabel, die eine Sensoranordnung 16 darstellen und sich über die gesamte zu überwachende Fläche des Strukturelements 12 und damit des Strukturbauteils 10 erstrecken. Als Glasfaserkabel können auch die vorhandenen Glasfasern des Strukturgewebes dienen.

Auf der linken Seite des Strukturelements 12 wird in die Lichtwellenleiter 14 mit lichtemittierenden Elementen 18 Licht eingeleitet. Als lichtemittierende Elemente 18 kommen in diesem Fall LEDs zum Einsatz, wobei jedem Lichtwellenleiter 14 ein lichtemittierendes Elements 18 zugeordnet ist.

Auf der rechten Seite des Strukturelements 12 sind photo- bzw. lichtempfindliche Elemente 20, in diesem Fall Photowiderstände, vorgesehen, die durch die Lichtwellenleiter 14 transmittierte elektromagnetische Strahlung bspw. Licht erfassen bzw. detektieren. Die Lichtwellenleiter 14 sind so angebracht, dass es bei einer Überlastung des Strukturbauteils 10 durch eine von außen angreifende Kraft F zu einer Beeinträchtigung der Funktion oder gar zu einem Bruch 22 zumindest eines der Lichtwellenleiter 14 kommt. Damit wird die Lichtleitung unterbrochen und das betroffene photoempfindliche Element 20 unterbricht den Stromfluss in einer Reihenschaltung 24 der photoempfindlichen Elemente 20.

Auf diese Weise kann erkannt werden, ob einer der Lichtwellenleiter 18 beschädigt ist. In Abhängigkeit der Auswertung des erfassten Lichts kann auch das Maß der Beschädigung des oder der Lichtwellenleiter 14 und damit des Strukturbauteils 10 bestimmt werden. Insbesondere kann auch festgestellt werden, in welchen Bereichen das Strukturbauteil 10 beeinträchtigt oder beschädigt ist. Dies erhöht die Empfindlichkeit der verwendeten Sensoranordnung.

Das vorgestellte Strukturbauteil 10 dient zum Schutz von Komponenten und Bauteilen und wird bspw. an der Unterseite eines Kraftfahrzeugs angebracht. Aus diesem Grunde ist das vorgestellte Strukturbauteil 10 als ein flächiges, faserverstärktes Strukturbauteil 10 ausgebildet.

## Patentansprüche

1. Strukturbauteil, insbesondere für eine Fahrzeugkarosserie, mit einem Strukturelement (12) und einer Sensoranordnung (16), wobei die Sensoranordnung (16) mit dem Strukturelement (12) verbunden ist und mindestens einen Lichtwellenleiter (14) umfasst.

2. Strukturbauteil nach Anspruch 1, bei dem wenigstens ein Lichtwellenleiter (14) von dem mindestens einen Lichtwellenleiter (14) in dem Strukturelement (12) angeordnet ist.

3. Strukturbauteil nach Anspruch 1 oder 2, bei dem wenigstens ein Lichtwellenleiter (14) von dem mindestens einen Lichtwellenleiter (14) an einer Oberfläche des Strukturelements (12) angeordnet ist.

4. Strukturbauteil nach einem der Ansprüche 1 bis 3, bei dem das Strukturelement (12) als flächiges Element ausgebildet ist.

5. Strukturbauteil nach einem der Ansprüche 1 bis 4, bei dem das Strukturelement (12) als faserverstärktes Element mit thermoplastischer oder duroplastischer Matrix ausgebildet ist.

6. Strukturbauteil nach Anspruch 5, bei dem das Strukturelement (12) ein Gewebe aus Endlosfasern umfasst, das in einer thermoplastischen oder duroplastischen Matrix eingebettet ist.

7. Strukturbauteil nach Anspruch 5, bei dem das Strukturelement (12) ein Gelege aus Endlosfasern umfasst, das in einer thermoplastischen oder duroplastischen Matrix eingebettet ist.

8. Strukturbauteil nach einem der Ansprüche 5 bis 7, bei dem Fasern des faserverstärkten Elements zumindest zum Teil als Lichtwellenleiter (14) der Sensoranordnung (16) dienen.

9. Strukturbauteil nach einem der Ansprüche 1 bis 8, bei dem das Strukturelement (12) unidirektionale Profile oder Tapes umfasst, die in einer thermoplastischen Matrix eingebettet sind.

10. Strukturbauteil nach einem der Ansprüche 1 bis 8, bei dem das Strukturelement (12) unidirektionale Profile oder Tapes umfasst, die in einer duromeren Matrix eingebettet sind.

11. Strukturbauteil nach einem der Ansprüche 1 bis 10, das mindestens ein lichtemittierendes Element (18) und mindestens ein photoempfindliches Element (20) aufweist.

12. Strukturbauteil nach Anspruch 11, bei dem das mindestens eine lichtemittierende Element (18) eine Leuchtdiode ist.

13. Strukturbauteil nach Anspruch 11 oder 12, bei dem das mindestens eine photoempfindliche Element (20) ein Halbleiter-Photoelement ist.

14. Strukturbauteil nach einem der Ansprüche 1 bis 13, das dazu eingerichtet ist, als Unterbodenschutz eines Kraftfahrzeugs zu dienen.
